# EUROPEAN PATENT SPECIFICATION

(11) **EP 4 207 946 B1**
(45) Date of publication and mention of the grant of the patent: **10.07.2024**
(21) Application number: 22209473.2
(22) Date of filing: 24.11.2022
(51) Int. Cl.: H05B 6/12, A47J 36/02

(54) **HEAT-GENERATING ASSEMBLY, COOKING APPLIANCE AND COOKING DEVICE**
WÄRMEERZEUGENDE ANORDNUNG, KOCHGERÄT UND KOCHVORRICHTUNG
ENSEMBLE DE GÉNÉRATION DE CHALEUR, APPAREIL DE CUISSON ET DISPOSITIF DE CUISSON

(30) Priority: 31.12.2021 CN 202111673875
(43) Date of publication of application: 05.07.2023
(73) Proprietor: Foshan Shunde Midea Electrical Heating Appliances Manufacturing Co., Ltd., Foshan, Guangdong 528311 (CN)
(72) Inventor: LI, Xinghang, Foshan, 528311 (CN); CAO, Dahua, Foshan, 528311 (CN); WANG, Ting, Foshan, 528311 (CN); WAN, Peng, Foshan, 528311 (CN); ZHOU, Yujie, Foshan, 528311 (CN); LIU, Zhicai, Foshan, 528311 (CN)
(74) Representative: Whitlock, Holly Elizabeth Ann

(56) References cited:
- EP-B1- 1 196 070
- DE-A1- 10 127 051
- KR-B1- 101 896 870

## Description

### FIELD

The present disclosure relates to the technical field of household appliances, and more particularly, to a heat-generating assembly, a cooking appliance, and a cooking device.

### BACKGROUND

Existing cooking appliances have used many inorganic materials such as ceramic and glass. For example, an electric stewpot has a ceramic liner, a glass health kettle has a liner made of glass material, and a microcrystal pot, a ceramic pot or the like are usable with an induction cooker or the like. These inorganic materials have very good chemical stability, and are healthy and environmentally friendly. However, these inorganic materials may have many defects, such as low heat transfer efficiency, poor toughness, being fragile, and the like. A conventional heating method mainly adopts a heat-generating assembly such as a heat-generating tube and a heat-generating plate. Glassware is brought into contact with the heat-generating tube and the heat-generating plate for heat transfer. In such a heating method, although an overall assembly is simple, there are significant problems. For example, a contact area is too small to realize close contact, which may result in low heat transfer efficiency. Thus, a time required for heating water of 1 liter by a kettle by this method would exceed 15 min. This method is improved for thermal efficiency by related manufacturers. However, less effect is obtained. Further, some manufacturers adopt a thick film heating or the like to print a thick film circuit on a glass plate for heating. This solution has high thermal efficiency and uniform heating with high requirement for the glass. For example, quartz glass or the like of temperature-resistant should be employed. In addition, a safety problem also exists. In a case where the glass is broken, great current may generate a great hidden danger to the safety of a consumer. Similar solutions may adopt printing of tin oxide, thermal spraying of heat-generating wires, and the like.

DE10127051 A1 discloses a heat generating assembly according to the preamble of claim 1.

Therefore, the current heat-generating assembly also needs to be further improved.

### SUMMARY

The present disclosure aims to solve at least one of the technical problems in the related art to some extent. To this end, an object of the present disclosure is to provide a heat-generating assembly, a cooking appliance, and a cooking device. The heat-generating assembly has advantages such as high heat transfer efficiency, uniform heat transfer, and high heating stability, to remarkably improve cooking effects and service life of the cooking device and the cooking appliance including the heat-generating assembly.

According to an aspect of the present disclosure, a heat-generating assembly is provided. The heat-generating assembly includes two non-metal plates, a heating layer located between the non-metal plates. The heating layer includes an inorganic oxide matrix, and metal powder particles distributed in the inorganic oxide matrix. In at least part of the heating layer, a plurality of particle aggregates is formed by the metal powder particles and arranged in a thickness direction of the heating layer. Therefore, heating efficiency, heating uniformity and heating stability of the heat-generating assembly are improved. Meanwhile, thermal stress generated during the heating is reduced, and risks of cracking and inter-layer peeling of the heating layer are reduced.

According to some embodiments of the present disclosure, in the at least part of the heating layer, the plurality of particle aggregates is arranged at intervals and/or adjoined to each other in the thickness direction of the heating layer. Therefore, the thermal stress generated during the heating is reduced, and absorption of the inorganic oxide matrix for the thermal stress is facilitated. Thus, stability of resistance of the heat-generating assembly is improved, and appearance effect of the heat-generating assembly is improved.

According to some embodiments of the present disclosure, in the at least part of the heating layer, the plurality of particle aggregates is arranged at intervals in an extending direction of the non-metal plates. Thus, the non-metal plates are uniformly heated.

According to some embodiments of the present disclosure, in the at least part of the heating layer, the plurality of particle aggregates is staggered with each other in the thickness direction of the heating layer. Therefore, the non-metal plates are uniformly heated, and a risk of a fracture of the non-metal plates is reduced.

According to some embodiments of the present disclosure, in the at least part of the heating layer, the particle aggregates are connected to each other by the inorganic oxide matrix, and the inorganic oxide matrix has pores. Therefore, the thermal stress generated during the heating is reduced, and risks of the cracking and the peeling of the heating layer are reduced.

According to some embodiments of the present disclosure, a pore is formed at a connection of the particle aggregate and the inorganic oxide matrix. The pores in the inorganic oxide matrix each have a smaller size than the pore at the connection between the particle aggregate and the inorganic oxide matrix. Therefore, the size of each pore in the inorganic oxide matrix is small, which can improve stability of the inorganic oxide matrix structure, and reduce the risk of inter-layer peeling of the heating layer.

According to some embodiments of the present disclosure, the plurality of particle aggregates is arranged in a same direction along the extending direction of the non-metal plates. Thus, the non-metal plates are uniformly heated.

According to some embodiments of the present disclosure, the plurality of particle aggregates is arranged parallel to the non-metal plates. Therefore, the non-metal plates are uniformly heated, and the risk of fracture of the non-metal plates is reduced.

According to some embodiments of the present disclosure, the particle aggregate is of an irregular shape. The particle aggregate has a long axis extending in an extending direction of the non-metal plates, and a short axis extending in the thickness direction of the heating layer. Therefore, the heating efficiency is improved, heat transfer is uniform, and risk of cracking and peeling of the heating layer is reduced.

According to some embodiments of the present disclosure, in the at least part of the heating layer, the plurality of particle aggregates is arranged in layers in the thickness direction of the heating layer. The particle aggregates in each of the layers are arranged at intervals and/or adjoined to each other in an extending direction of the non-metal plates. Therefore, the heating efficiency is improved, heat transfer is uniform, and risk of cracking and peeling of the heating layer is reduced.

According to some embodiments of the present disclosure, in the at least part of the heating layer, two adjacent layers of particle aggregates are connected by the inorganic oxide matrix. Therefore, uniformity of heat transfer is improved, and aggregation of heat in the heating layer is reduced.

According to some embodiments of the present disclosure, in the at least part of the heating layer, the plurality of particle aggregates is arranged away from the non-metal plates, and spaced apart from the non-metal plates by the inorganic oxide matrix. Therefore, the uniformity of heat transfer is improved, the non-metal plates are prevented from being broken, and noise during the heating is reduced to a certain extent.

According to some embodiments of the present disclosure, in the at least part of the heating layer, the plurality of particle aggregates in the heating layer is arranged away from a middle region of the heating layer. Therefore, it is avoided that the heat is aggregated in a middle part of the heating layer to cause the heating layer to peeling, and bubbles generated in the heat-generating assembly are avoided to a certain extent.

According to some embodiments of the present disclosure, the heating layer is embedded into the non-metal plate. A contact interface between the heating layer and the non-metal plate is a concave-convex interface. Thus, uniformity of heat transfer to the non-metal plate is improved.

According to some embodiments of the present disclosure, the non-metal plates are different in thickness.

According to another aspect of the present disclosure, a heat-generating assembly is provided. The heat-generating assembly includes two non-metal plates, and a heating layer located between the non-metal plates. The heating layer includes metal powder particles and an inorganic oxide matrix. The metal powder particles are distributed in the inorganic oxide matrix. In at least part of the heating layer, along a thickness direction of the heating layer, a content of the metal powder particles follows a changing trend of increasing, then decreasing, and then increasing again. Therefore, the heat is prevented from being aggregated in the middle part of the heating layer, and the uniformity of heat transfer is improved.

According to some embodiments of the present disclosure, in the at least part of the heating layer, along the thickness direction of the heating layer, from one side surface to the other side surface of the heating layer, the content of the metal powder particles follows a changing trend of increasing, then decreasing, then increasing again, and then decreasing again. Therefore, the uniformity of heat transfer is improved.

According to some embodiments of the present disclosure, in the at least part of the heating layer, along the thickness direction of the heating layer, from one side surface to the other side surface of the heating layer, a content of silicon, oxygen, or aluminum element follows a changing trend of decreasing, then increasing, then decreasing again, and then increasing again.

According to some embodiments of the present disclosure, in the at least part of the heating layer, along the thickness direction of the heating layer, from one side surface to the other side surface of the heating layer, the content of the silicon, oxygen, or aluminum element increases in a region where the content of the metal powder particles decreases, and/or in the at least part of the heating layer, along the thickness direction of the heating layer, from one side surface to the other side surface of the heating layer, the content of silicon, oxygen, or the aluminum decreases in a region where the content of the metal powder particles increases.

According to some embodiments of the present disclosure, in the at least part of the heating layer, along the thickness direction of the heating layer, from one side surface to the other side surface of the heating layer, the metal powder particles are aggregated to form the particle aggregates in a region where the content of the metal powder particles increases. Therefore, the heating efficiency and the heating uniformity of the heat-generating assembly are improved. Meanwhile, the thermal stress generated during the heating is reduced, and risk of the cracking and the inter-layer peeling of the heating layer is reduced.

According to some embodiments of the present disclosure, the particle aggregates are arranged in an extending direction of the non-metal plates. Thus, the heat is facilitated to be transferred to the non-metal plates.

According to some embodiments of the present disclosure, the inorganic oxide matrix is located in a region where the content of the silicon, oxygen, or aluminum element increases.

According to some embodiments of the present disclosure, the inorganic oxide matrix is made of a material including at least one of SiO₂, Bi₂O₃, Al₂O₃, B₂O₃, ZnO, TiO₂ and Na₂O; and/or the metal powder particle is any one of silver, copper, and aluminum; and/or a content of the metal powder particles accounts for 60% to 90% of the total mass of the heating layer.

According to yet another aspect of the present disclosure, a cooking appliance is provided. The cooking appliance includes a container body, and the heat-generating assembly as described above. The heat-generating assembly is disposed in the container body. Therefore, the cooking appliance has all the features and advantages of the heat-generating assembly described above, and the description thereof in detail will be omitted herein. In general, the cooking appliance at least has advantages such as fast and uniform heat transfer, good heating stability, and long service life.

According to some embodiments of the present disclosure, a thickness of the non-metal plate close to an object to be heated is smaller than a thickness of the non-metal plate away from the object to be heated. Therefore, utilization rate of the heat is increased, and cracking of the second non-metal plate is reduced to a certain extent.

According to still yet another aspect of the present disclosure, a cooking device is provided. The cooking device includes a base, and the cooking appliance described above. Therefore, the cooking device has all the features and advantages of the cooking appliance described above, and the description thereof in detail will be omitted herein. In general, the cooking device at least has advantages such as fast and uniform heat transfer, good heating stability, and long service life.

### BRIEF DESCRIPTION OF THE DRAWINGS

The above and/or additional aspects and advantages of the present disclosure will become more apparent and more understandable from the description of embodiments taken in conjunction with the accompanying drawings, in which:
FIG. 1 is a schematic structural view showing a heat-generating assembly according to an embodiment of the present disclosure.
FIG. 2 is a schematic structural view showing a heat-generating assembly according to another embodiment of the present disclosure.
FIG. 3 is a schematic structural view showing a heat-generating assembly according to another embodiment of the present disclosure.
FIG. 4 is a schematic structural view showing a heat-generating assembly according to another embodiment of the present disclosure.
FIG. 5 is a schematic structural view showing a heat-generating assembly according to another embodiment of the present disclosure.
FIG. 6 is a schematic structural view showing a heat-generating assembly according to another embodiment of the present disclosure
FIG. 7 is a schematic structural view showing a heat-generating assembly according to another embodiment of the present disclosure.
FIG. 8 is a schematic structural view showing a heat-generating assembly according to another embodiment of the present disclosure.
FIG. 9 is a schematic structural view showing a heat-generating assembly according to another embodiment of the present disclosure.
FIG. 10 is an element content distribution view showing a heat-generating assembly according to another embodiment of the present disclosure.
FIG. 11 is a schematic structural view showing a cooking appliance according to an embodiment of the present disclosure.
FIG. 12 is a schematic structural view showing a cooking device according to an embodiment of the present disclosure.

### Reference numerals:

100: first non-metal plate; 200: heating layer; 210: particle aggregate; 220: inorganic oxide matrix; 300: second non-metal plate; 1000: cooking appliance; 1100: heat-generating assembly; 1200: container body; 2000: cooking device; 3000: base.

### DETAILED DESCRIPTION

Embodiments of the present disclosure are described below in detail. The embodiments described below are exemplary and merely used to explain the present disclosure, rather than being construed as limitation on the present disclosure. The specific techniques or conditions not indicated in the embodiments are implemented based on the techniques or conditions described in the related art or based on product specifications. Adopted reagents or instruments, where a manufacturer is not specified, are all conventional products commercially available.

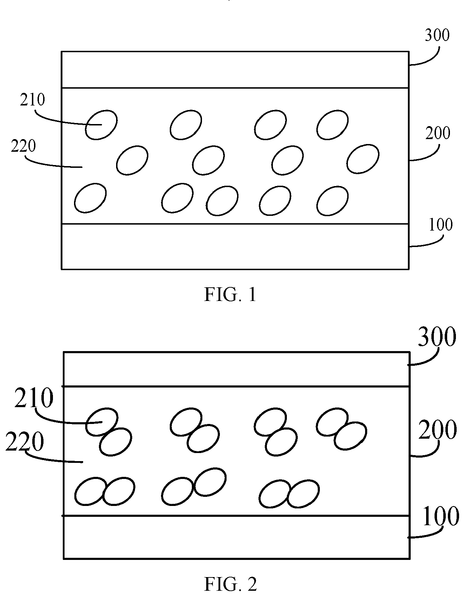

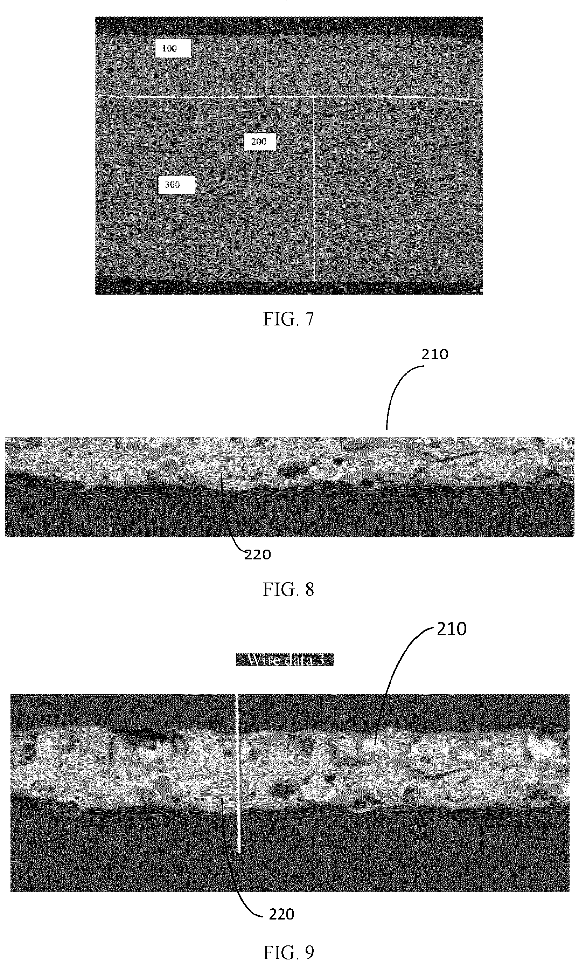

In an aspect of the present disclosure, a heat-generating assembly is provided. Referring to FIG. 1 and FIG. 7, the heat-generating assembly includes two non-metal plates, and a heating layer 200 located between the non-metal plates. The two non-metal plates are a first non-metal plate 100 and a second non-metal plate 300, respectively. In some embodiments, the first non-metal plate 100 and the second non-metal plate 300 are arranged opposite to each other at intervals. In some embodiments, the first non-metal plate 100 and the second non-metal plate 300 are arranged in parallel. The heating layer 200 is located in a spacing between the first non-metal plate 100 and the second non-metal plate 300. According to some embodiments of the present disclosure, a thickness of the second non-metal plate 300 is not particularly limited, and may be selected by a person skilled in the art as desired. In some embodiments, as the thickness of the second non-metal plate 300 increases, a temperature difference inside the second non-metal plate 300 also increases during the heating, and thermal stress increases. On the contrary, the smaller the thickness of the second non-metal plate 300, the strength decreases accordingly, and a risk of cracking during the arrangement of the heating layer 200 is also improved accordingly. Therefore, the thickness of the second non-metal plate 300 may be adjusted and selected based on specific needs of the thermal stress, mechanical strength and the like.

According to some embodiments of the present disclosure, a thickness of the first non-metal plate 100 is not particularly limited, and may be selected by a person skilled in the art as desired. Similarly, as the thickness of the first non-metal plate 100 increases, mechanical strength of the first non-metal plate 100 increases, and a risk of collision may be reduced to some extent during use. On the contrary, when the thickness of the first non-metal plate 100 is too small, the mechanical strength of the first non-metal plate 100 decreases. Therefore, the thickness of the first non-metal plate 100 may be selected by a person skilled in the art as desired. Meanwhile, during use of the heat-generating assembly, when the first non-metal plate 100 is a surface in contact with an object to be heated, the second non-metal plate 300 is a surface away from the object to be heated. In this case, the thickness of the second non-metal plate 300 should be greater than the thickness of the first non-metal plate 100 to shorten a distance by which the heat is transferred to the first non-metal plate 100. Thus, heat transfer rate is increased, and heat utilization rate is improved. Otherwise, the thickness of the first non-metal plate 100 is greater than the thickness of the second non-metal plate 300. In addition, the first non-metal plate 100 and the second non-metal plate 300 may be made of a material selected by a person skilled in the art as desired, as long as the material has high temperature resistance. For example, the first non-metal plate 100 and the second non-metal plate 300 each independently are made of one of ceramic, microcrystalline glass, and high borosilicate glass. In some embodiments, both the first non-metal plate 100 and the second non-metal plate 300 may be made of the ceramic, or both the first non-metal plate 100 and the second non-metal plate 300 may be made of glass, or one of the first non-metal plate 100 and the second non-metal plate 300 is made of the glass, and the other is made of the ceramic. The material may be selected by a person skilled in the art based on an overall appearance of a product.

According to embodiments of the present disclosure, referring to FIG. 2 and FIG. 8, the heating layer 200 includes metal powder particles and an inorganic oxide matrix 220. The metal powder particles are distributed in the inorganic oxide matrix 220. For example, the metal powder particles are filled in at least a part of the pores of the inorganic oxide matrix 220. In at least a part of the heating layer 200, a plurality of particle aggregates 210 is formed by the metal powder particles. The plurality of particle aggregates 210 are arranged in a thickness direction of the heating layer 200. In FIG. 8, the particle aggregates have a metallic luster, and the remaining gelatinous materials are the inorganic oxide matrix. The inventor has found that after the plurality of metal powder particles in the heating layer 200 is aggregated to form the particle aggregates 210, heat in the heating layer 200 may be quickly transferred along the granular aggregates 210 to improve heating efficiency of the heating layer 200. Further, the formed particle aggregates 210 are distributed in the thickness direction of the heating layer 200, enabling heat generated by the heating layer 200 to be uniformly transferred to both sides of the heating layer 200 to improve heating uniformity of the heating layer 200. Thus aggregation of the heat on one side of the heating layer 200 is reduced, and stability of the heat-generating assembly is improved. In addition, due to an existence of the inorganic oxide matrix 220 between the plurality of particle aggregates 210, the inorganic oxide matrix 220 may disperse thermal stress generated by the particle aggregated 210 during the heating, to reduce risks of cracking and the inter-layer peeling of the heating layer 200 and prolong service life of the heat-generating assembly.

It should be noted that, unless otherwise specified, the "particle aggregates" in the present disclosure may be understood as aggregates formed by bringing a plurality of metal particles to be in contact with each other.

According to the embodiments of the present disclosure, a pore (not illustrated in figures) is formed at a connection between the particle aggregate 210 and the inorganic oxide matrix 220. The pores in the inorganic oxide matrix 220 each have a smaller size than the pore at the connection between the particle aggregate 210 and the inorganic oxide matrix 220. The inventor has found that when the size of each pore in the inorganic oxide matrix 220 is too great, an adhesive strength between the inorganic oxide matrixes 220 is weak, and adhesion is not firm, which may result in a fracture during the heating. That is, the pore of small size, of the inorganic oxide matrix 220 can improve stability of the inorganic oxide matrix 220 in structure and the adhesive strength between the inorganic oxide matrixes 220, to reduce the risk of the inter-layer peeling of the heating layer 200 and prolong the service life of the heat-generating assembly.

According to some embodiments of the present disclosure, the metal powder particles in the above heating layer 200 include a weak magnetic metal material. It should be noted herein that the weak magnetic metal material refers to a metal material having a relative permeability smaller than 1. According to some embodiments of the present disclosure, a type of the weak magnetic metal material is not limited, and may be selected by a person skilled in the art as desired. For example, the weak magnetic metal material may be silver, aluminum, copper, or the like. According to some other embodiments of the present disclosure, the inorganic oxide matrix in the above heating layer 200 may be any inorganic oxide having pores. For example, the inorganic oxide matrix may include at least one of silicon oxide, bismuth oxide, magnesium oxide, or potassium oxide. In addition, in order to improve heating effect of the heat-generating assembly, a content of the inorganic oxide matrix 220 in the heating layer 200 ranges from 10% to 40% (mass percentage), and a content of the weak magnetic metal material ranges from 60% to 90% (mass percentage).

According to some embodiments of the present disclosure, an area of the heating layer 200 in the heat-generating assembly is not particularly limited. In some embodiments, in order to improve utilization rate of the heat generated by the heating layer 200, an orthographic projection of the heating layer 200 on the first non-metal plate 100 or on the second non-metal plate 300 is smaller than or equal to an area of the first non-metal plate 100 or an area of the second non-metal plate 300. That is, the area of the heating layer 200 is the same as or smaller than the area of the first non-metal plate 100 or the area of the second non-metal plate 300.

Therefore, when the heat-generating assembly and a cooking appliance are assembled by welding, after the first non-metal plate 100 and the second non-metal plate 300 are heated to be softened, adverse effects may not be caused to the heating layer 200, which would not in turn affect use of a final product. Those skilled in the art should understand that regardless of a manner in which the heat-generating assembly is assembled with the cooking appliance, after the assembling, a closed space is formed between the heat-generating assembly and the cooking appliance, and may also be other situations. The assembling manner may be selected by a person skilled in the art as desired, as long as the closed space can be formed.

It should be noted here that the term "area is the same" in the present disclosure should be understood in a broad sense. That is, the area of the heating layer 200 may not be strictly controlled to be absolutely identical with that of the first non-metal plate 100 or the second non-metal plate 300, and may be approximately the same, for example, as long as no significant area difference is observed by naked eyes.

According to some embodiments of the present disclosure, a specific forming manner of the heating layer 200 is not specially limited, and may be selected and set by those skilled in the art as desired. For example, the heating layer 200 may be formed by adhering a metal film layer on the first non-metal plate 100 and the second non-metal plate 300, or may be formed by performing a water transfer printing processing on the first non-metal plate 100 and the second non-metal plate 300, or may be formed through thermal spraying on the first non-metal plate 100 and the second non-metal plate 300. Specific conditions of adhering the metal film layer, the water transfer printing processing, and the thermal spraying are not particularly limited in the present disclosure, as long as a uniform and flat heating layer 200 can be formed.

According to some embodiments of the present disclosure, the heating layer 200 may be connected to the first non-metal plate 100 and the second non-metal plate 300 by sintering and curing. Thus, the heating layer 200 may be firmly bonded with the first non-metal plate 100 and the second non-metal plate 300. When the heating layer 200 is connected to the first non-metal plate 100 and the second non-metal plate 300 by the sintering and curing, a sintering and curing temperature of the heating layer 200 is smaller than a softening temperature of the first non-metal plate 100 and the second non-metal plate 300. Thus, when connected by the sintering and curing, the first non-metal plate 100 and/or the second non-metal plate 300 would not be deformed.

It should be noted herein that when the heating layer 200 is connected to the first non-metal plate 100 and the second non-metal plate 300 by the sintering and curing, the heating layer 200 and the non-metal plate (at least one of the first non-metal plate 100 and the second non-metal plate 300) may be mutually embedded at an interface at which they are in contact with each other, and thus the interface is not a flat interface.

According to some embodiments of the present disclosure, the heating layer 200 may further be connected to the first non-metal plate 100 and/or the second non-metal plate 300 by heating a hardened adhesive layer. For example, during use of the heat-generating assembly, when the first non-metal plate 100 is the surface in contact with the object to be heated, the second non-metal plate 300 is the surface away from the object to be heated. In this case, the heating layer 200 is connected to the first non-metal plate 100 by the sintering and curing, and is connected to the second non-metal plate 300 through the adhesive layer. Therefore, thermal resistance between the heating layer 200 and the second non-metal plate 300 can be improved, transfer rate of the heat to the second non-metal plate 300 is reduced, and transfer efficiency of the heat to the first non-metal plate 100 is increased, which further increases the utilization rate of the heat. It should be noted herein that the sintering and curing temperature of the heating layer 200 is smaller than the softening temperature of the first non-metal plate 100. A heating and hardening temperature of the adhesive layer is smaller than the softening temperature of the second non-metal plate 300. Therefore, the heating layer 200 may be firmly bonded to the first non-metal plate 100 and the second non-metal plate 300. In addition, during connecting, the first non-metal plate 100 and the second non-metal plate 300 are not deformed.

According to some embodiments of the present disclosure, during the using of the heat-generating assembly, when the second non-metal plate 300 is the surface in contact with the object to be heated, the first non-metal plate 100 is the surface away from the object to be heated. In this case, the heating layer 200 may be connected to the first non-metal plate 100 by the adhesive layer, and may be connected to the second non-metal plate 300 by the sintering and curing. Therefore, thermal resistance between the heating layer 200 and the first non-metal plate 100 can be improved, transfer rate of the heat to the first non-metal plate 100 is reduced, and transfer efficiency of the heat to the second non-metal plate 300 is increased. Thus, the utilization rate of the heat is increased. It should be noted herein that the heating and hardening temperature of the adhesive layer is smaller than the softening temperature of the first non-metal plate 100. The sintering and curing temperature of the heating layer 200 is smaller than the softening temperature of the first non-metal plate 100. Therefore, the heating layer 200 may be firmly bonded to the first non-metal plate 100 and the second non-metal plate 300. In addition, during the connecting, the first non-metal plate 100 and the second non-metal plate 300 are not deformed.

According to some embodiments of the present disclosure, the heating layer 200 is connected to both the first non-metal plate 100 and the second non-metal plate 300 through the adhesive layer. It should be noted herein that the heating and hardening temperature of the adhesive layer is smaller than the softening temperature of each of the first non-metal plate 100 and the second non-metal plate 300. Therefore, the heating layer 200 may be firmly bonded to the first non-metal plate 100 and the second non-metal plate 300. In addition, during the connecting, the first non-metal plate 100 and the second non-metal plate 300 are not deformed. It should be noted that specific conditions for the heating and hardening of the adhesive layer and the sintering and curing may be selected by a person skilled in the art as desired, as long as the heating layer 200 can be firmly bonded to the first non-metal plate 100 and/or the second non-metal plate 300, and the description thereof in detail will be omitted herein.

It should be noted that the arrangement of the particle aggregates 210 in the heating layer 200 is not particularly limited, and may be designed by a person skilled in the art based on product requirements.

For example, referring to FIG. 1, in the at least part of the heating layer 200, the plurality of particle aggregates 210 is arranged at intervals in the thickness direction of the heating layer 200. Referring to FIG. 2, in the at least part of the heating layer 200, the plurality of particle aggregates 210 is arranged to be adjoined to each other in the thickness direction of the heating layer 200. It should be noted herein that the particle aggregates 210 arranged to be adjoined to each other are not limited to two particle aggregates, and may include three or more particle aggregates. During heating, the particle aggregates 210 arranged to be adjoined to each other or at intervals can disperse the thermal stress generated to facilitate absorption of the inorganic oxide matrix 220 to the thermal stress, which can improve stability of the resistance of the heat-generating assembly. It should be noted that in the at least part of the heating layer 200, a part of the plurality of particle aggregates 210 is arranged at intervals in the thickness direction of the heating layer 200, and the remaining are arranged to be adjoined to each other in the thickness direction of the heating layer 200. That is, the arrangement of the plurality of particle aggregates 210 in the heating layer 200 includes a combination of the arrangement of the particle aggregates 210 at intervals and the arrangement of the particle aggregates 210 adjoined to each other.

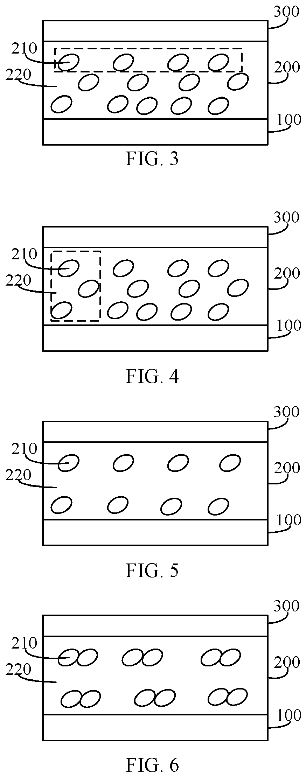

According to some other embodiments of the present disclosure, referring to FIG. 3, in at least part of the heating layer 200, the plurality of particle aggregates 210 is arranged at intervals in an extending direction of the first non-metal plate 100 and/or the second non-metal plate 300. This arrangement of the particle aggregates 210 is illustrated in a dotted region in FIG. 3. Thus, the heat in the heating layer 200 can be quickly transferred along the particle aggregates 210 to improve the heating efficiency of the heating layer 200. In addition, since the plurality of particle aggregates 210 is arranged at intervals in the extending direction of the first non-metal plate 100 and/or the second non-metal plate 300, the heat generated by the heating layer 200 can be uniformly transferred to both sides of the heating layer 200. Thus, heating uniformity of the heating layer 200 can be improved, and the aggregation of the heat on one side of the heating layer 200 can be reduced, which can improve the stability of the heat-generating assembly. In addition, due to the existence of the inorganic oxide matrix 220 between the plurality of particle aggregates 210, the inorganic oxide matrix 220 can disperse the thermal stress generated by the particle aggregates 210 during the heating to reduce the risks of the cracking and the inter-layer peeling of the heating layer 200 and prolong the service life of the heat-generating assembly.

According to some embodiments of the present disclosure, referring to FIG. 4, in at least part of the heating layer 200, the plurality of particle aggregates 210 is staggered with each other in the thickness direction of the heating layer 200. This arrangement of the particle aggregates 210 is illustrated in a dotted region in FIG. 4. Thus, the heat in the heating layer 200 can be quickly transferred along the particle aggregates 210 to improve the heating efficiency of the heating layer 200. In addition, since the formed particle aggregates 210 are staggered with each other in the thickness direction of the heating layer 200, the heat generated by the heating layer 200 can be uniformly transferred to both sides of the heating layer 200. Thus, the heating uniformity of the heating layer 200 can be improved, and the aggregation of the heat on one side of the heating layer 200 can be reduced, which can improve the stability of the heat-generating assembly. In addition, due to the existence of the inorganic oxide matrix 220 between the plurality of particle aggregates 210, the inorganic oxide matrix 220 can disperse the thermal stress generated by the particle aggregate 210 during the heating to reduce the risks of the cracking and the inter-layer peeling of the heating layer 200 and prolong the service life of the heat-generating assembly.

According to some embodiments of the present disclosure, referring to FIG. 3, in at least part of the heating layer 200, the plurality of particle aggregates 210 is arranged in a same direction along the extending direction of the first non-metal plate 100 and/or the second non-metal plate 300. That is, the particle aggregates 210 indicated in the dotted region in FIG. 3 are arranged in the same direction along the extending direction of the first non-metal plate 100 and/or the second non-metal plate 300. In some embodiments, the particle aggregates 210 may be arranged parallel to the first non-metal plate 100 and the second non-metal plate 300. It should be noted herein that the parallel arrangement herein is not an absolute parallel arrangement, and should mean that an entirety of the particle aggregates 210 is substantially parallel to the first non-metal plate 100 and the second non-metal plate 300. The inventor has found that when the particle aggregates 210 are arranged in the extending direction of the first non-metal plate 100 and the second non-metal plate 300, the heat in the heating layer 200 can be quickly transferred along the particle aggregates 210. Thus, the heating efficiency of the heating layer 200 can be improved. Further, since the particle aggregates are arranged parallel to the first non-metal plate 100 and the second non-metal plate 300, the heating uniformity of the heating layer 200 can be improved, and the aggregation of the heat on one side of the heating layer 200 can be reduce, which can improve the stability of the heat-generating assembly. In addition, due to the existence of the inorganic oxide matrix 220 between the plurality of particle aggregates 210, the inorganic oxide matrix 220 may disperse the thermal stress generated by the particle aggregate 210 during the heating to reduce the risks of the cracking and the inter-layer peeling of the heating layer 200 and prolong the service life of the heat-generating assembly.

It should be understood by those skilled in the art that the particle aggregates 210 formed by aggregating different metal powders in the heating layer 200 are necessarily not exactly the same as each other in size and shape. For example, the particle aggregates 210 may be of an irregular shape. Referring to FIGS. 1 to 4, the particle aggregate 210 has a long axis extending in the extending direction of the first non-metal plate 100 and/or the second non-metal plate 300, and a short axis extending in the thickness direction of the heating layer 200. Therefore, the particle aggregates 210 are each shaped to allow the long axis thereof to be close to the first non-metal plate 100 and the second non-metal plate 300 as much as possible to increase a heat transfer area between the particle aggregate 210 and the first non-metal plate 100 and the second non-metal plate 300, thereby increasing the utilization rate of the heat of the heating layer 200. Meanwhile, the particle aggregates 210 are arranged in the same direction as a whole. Thus, it is possible to improve the uniformity of the transferred heat, and reduce the aggregation of the heat on the heating layer 200 and the thermal stress generated in the heating layer 200 during the heating. Thus, the risks of the cracking and the inter-layer peeling of the heating layer 200 can be reduced.

It should be noted herein that the long axis refers to a longest line segment formed by connecting two points on the particle aggregate 210, and the long axis direction is an extending direction along the longest line segment. A short axis refers to a shortest line segment formed by connecting two points on the particle aggregate 210, and the short axis direction is an extending direction along the line shortest segment.

According to some embodiments of the present disclosure, referring to FIG. 5 and FIG. 6, in the at least part of the heating layer 200, the plurality of particle aggregates 210 is arranged in layers in the thickness direction of the heating layer 200. It should be noted that the thickness direction of the heating layer 200 in each of the layers may include the plurality of particle aggregates 210. Referring to FIG. 5, the particle aggregates in each of the layers are arranged at intervals in the extending direction of the first non-metal plate 100 and/or the second non-metal plate 300. Referring to FIG. 6, the particle aggregates in each of the layers are arranged to be adjoined to each other in the extending direction of the first non-metal plate 100 and/or the second non-metal plate 300. Therefore, the heat in the heating layer 200 may be quickly transferred along the particle aggregates 210 to improve the heating efficiency of the heating layer 200. Further, since the particle aggregates in each of the layers are arranged at intervals and/or adjoined to each other in the extending direction of the first non-metal plate 100 and/or the second non-metal plate 300, the heating uniformity of the heating layer 200 can be improved, and the aggregation of heat on one side of the heating layer 200 can be reduced, which can improve the stability of the heat-generating assembly. In addition, due to the existence of the inorganic oxide matrix 220 between the plurality of particle aggregates 210, the inorganic oxide matrix 220 can disperse the thermal stress generated by the particle aggregate 210 during the heating to reduce the risks of the cracking and the inter-layer peeling of the heating layer 200 and prolong the service life of the heat-generating assembly.

According to some specific embodiments of the present disclosure, two adjacent layers of the particle aggregates 210 are connected by the inorganic oxide matrix 220. Compared with the arrangement in which the particle aggregates 210 are directly connected to each other, a small-range aggregation of the heat in the heating layer 200 can be reduced to facilitate the uniformity of the transferred heat. Meanwhile, since the inorganic oxide matrix 220 has the pores, the heat in the heating layer 200 can be quickly transferred along the particle aggregates 210 to improve the heating efficiency of the heating layer 200 and the heating uniformity of the heating layer 200 and reduce the aggregation of the heat on one side of the heating layer 200, which can improve the stability of the heat-generating assembly. In addition, due to the existence of the inorganic oxide matrix 220 between the plurality of particle aggregates 210, the inorganic oxide matrix 220 can disperse the thermal stress generated by the particle aggregate 210 during the heating to reduce the risks of the cracking and the inter-layer peeling of the heating layer 200 and prolong the service life of the heat-generating assembly.

According to some embodiments of the present disclosure, the plurality of particle aggregates 210 is arranged away from the first non-metal plate 100 and/or the second non-metal plate 300. That is, there is a predetermined distance between the particle aggregate 210 and the first non-metal plate 100 and the second non-metal plate 300. Thus, it is possible to prevent the particle aggregates 210 from being in direct contact with the first non-metal plate 100 and the second non-metal plate 300, which may further reduce the risk of the cracking of the first non-metal plate 100 and the second non-metal plate 300 during the heating. According to some embodiments of the present disclosure, the particle aggregates 210 may be spaced apart from the first non-metal plate 100 and/or the second non-metal plate 300 by the inorganic oxide matrix 220. Thus, it is possible to improve the uniformity of heat transfer to the non-metal plate, reduce a risk of excessive noise due to too high heating power, and reduce possibility of cracking of the non-metal plates.

According to some embodiments of the present disclosure, the plurality of particle aggregates 210 in the heating layer 200 is arranged away from a middle region of the heating layer 200. That is, the middle region of the heating layer 200 is not a region where the particle aggregates 210 are distributed by a greatest density. Therefore, the particle aggregates 210 are distributed in the middle region of the heating layer 200 by a relatively small density. Thus, it is possible to avoid the heat from being accumulated in the middle part of the heating layer 200 during the heating, which may result in the inter-layer peeling of the heating layer 200. For example, it is possible to avoid the peeling of the heating layer 200 from occurring in a region where the particle aggregates 210 are distributed at a relatively greater density and a region where the inorganic oxide matrixes 220 are distributed by a relatively greater density. Meanwhile, bubbles generated during the heating can be reduced. Further, it is possible to prevent an air layer from being formed in the middle region of the heating layer 200. The inventor has found that when the air layer is formed in the middle region of the heating layer 200, electrical parameters and inductive resistance of the heating layer 200 may be affected, and thus the heating effect would be affected.

According to some embodiments of the present disclosure, the heating layer 200 is embedded into the first non-metal plate 100 and/or the second non-metal plate 300, and thus a contact interface between the heating layer 200 and the first non-metal plate 100 and/or the second non-metal plate 300 is a concave-convex interface. Therefore, when a contact point on the heating layer 200 with the first non-metal plate 100 and the second non-metal plate 300 is a convex point, contact points on the first non-metal plate 100 and the second non-metal plate 300 with the heating layer 200 are correspondingly concave points. When the contact point on the heating layer 200 with the first non-metal plate 100 and the second non-metal plate 300 is a concave point, the contact points on the first non-metal plate 100 and the second non-metal plate 300 with the heating layer 200 are convex points. Therefore, adhesion between the heating layer 200 and the first non-metal plate 100 and the second non-metal plate 300 is better to increase the heat utilization rate.

In another aspect of the present disclosure, a heat-generating assembly is provided. Referring to FIG. 1, the heat-generating assembly includes two non-metal plates, and a heating layer 200 located between the non-metal plates. The non-metal plates include a first non-metal plate 100 and a second non-metal plate 300. In some embodiments, the first non-metal plate 100 and the second non-metal plate 300 are arranged in parallel. The heating layer 200 includes metal powder particles and an inorganic oxide matrix 220. The metal powder particles in the heating layer 200 are distributed in the inorganic oxide matrix 220. In the at least part of the heating layer, a plurality of particle aggregates 210 is formed by the metal powder particles. The plurality of particle aggregates 210 are arranged at intervals and/or adjoined to each other in a thickness direction of the heating layer 200. Along the thickness direction of the heating layer 200, a content of the metal powder particles follows a changing trending of increasing, then decreasing, and then increasing again. Compared with a distribution in which the content of the metal powder particles follows a changing trend of increasing, and then decreasing, in this arrangement manner, the middle region is not a heat concentration region. Thu, it is possible to prevent the inter-layer peeling of the heating layer due to the heating to improve the service life of the heat-generating assembly and the uniformity of heat transfer.

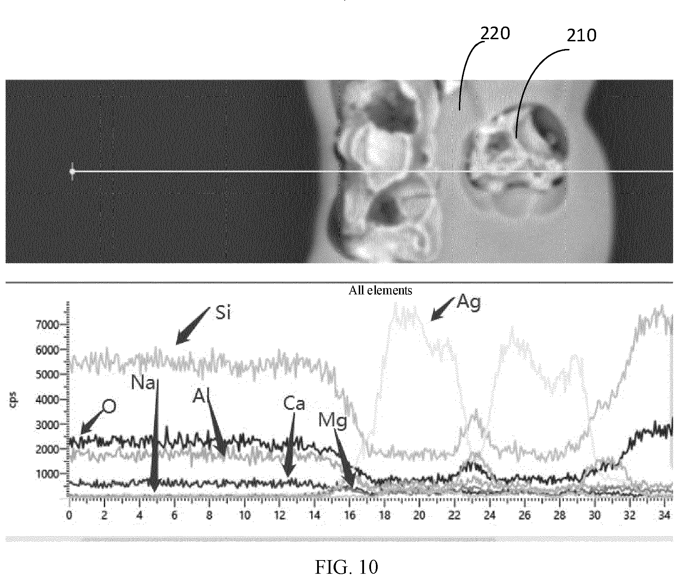

According to some embodiments of the present disclosure, referring to FIG. 9 and FIG. 10, in at least part of the heating layer 200, along the thickness direction of the heating layer 200, from one side surface to the other side surface of the heating layer 200, the content of the metal powder particles follows a changing trend of increasing, then decreasing, and then increasing again, and then decreasing again. Correspondingly, from one side surface to the other side surface of the heating layer 200, a content of silicon, oxygen, or aluminum element follows a changing trending of decreasing, then increasing, then decreasing again, and then increasing again. It should be noted herein that in the region where the content of the metal powder particles decreases, the content of the silicon, oxygen, or aluminum element increases correspondingly. In the region where the content of the metal powder particles increases, the content of the silicon, oxygen, or aluminum element decreases correspondingly. The inorganic oxide matrix is located in a region where the content of the silicon, oxygen, or aluminum element increases. According to some embodiments of the present disclosure, the material of the inorganic oxide matrix 220 is not particularly limited. For example, the inorganic oxide matrix 220 may be selected from at least one of SiO₂, Bi₂O₃, Al₂O₃, B₂O₃, ZnO, TiO₂ and Na₂O. According to some embodiments of the present disclosure, the metal powder may be a weak magnetic metal material. It should be noted herein that the weak magnetic metal material refers to a metal material having a relative permeability smaller than 1. According to some embodiments of the present disclosure, a type of the weak magnetic metal material is not limited, and may be selected by a person skilled in the art as desired. For example, the weak magnetic metal material may be silver, aluminum, copper, or the like. The content of the metal powder particles accounts for 60% to 90% of the total mass of the heating layer.

According to some embodiments of the present disclosure, in a region where the content of the metal powder particles increases, i.e., a region with a relatively great content of the metal powder particles, the metal powder particles are aggregated to form the particle aggregates. Thus, the heating efficiency and the heating uniformity of the heat-generating assembly can be improved. Meanwhile, a pore is formed between the particle aggregates, and thus it is possible to reduce the thermal stress generated during the heating and the risk of the cracking and the inter-layer peeling of the heating layer 200. According to some embodiments of the present disclosure, the particle aggregates 210 are arranged in the extending direction of the first non-metal plate 100 and/or the second non-metal plate 300.

It should be noted that in the heat-generating assembly described herein, descriptions of a material and thickness of the non-metal plate, a material and thickness of the heating layer, a connection manner between the non-metal plate and the heating layer, a distribution manner of the particle aggregates in the heating layer, a distribution manner of the particle aggregates and the inorganic oxide matrix, and the like may refer to the description of the heat-generating assembly according to the embodiments in the first aspect of the present disclosure.

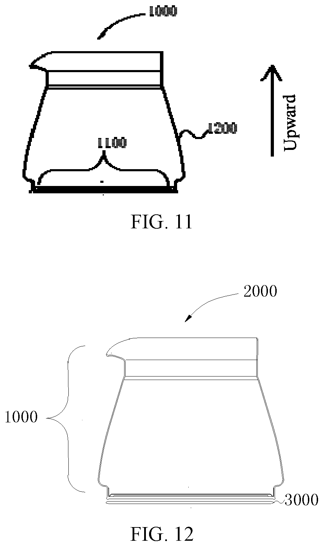

In yet another aspect of the present disclosure, a cooking appliance is provided. Referring to FIG. 11, the cooking appliance 1000 includes a container body 1200 and the heat-generating assembly as described above. The heat-generating assembly 1100 is disposed in the container body 1200. The first non-metal plate is arranged towards an upper end of the container body 1200 on the heat-generating assembly 1100. Therefore, the cooking appliance has all the features and advantages of the heat-generating assembly 1100 as described above, and the description thereof in detail will be omitted herein. In general, the advantages such as fast heat transfer, good heat transfer stability, and long service life can be at least provided.

According to some embodiments of the present disclosure, the heat-generating assembly 1100 is formed as a bottom of the container body 1200. The heat-generating assembly 1100 is detachably connected to side walls of the container body 1200. In some embodiments, this connection may be done through welding or in other manners, and may be implemented by a person skilled in the art as desired, as long as good assembly can be realized.

According to some embodiments of the present disclosure, when the first non-metal plate 100 is the surface in contact with an object to be heated and the second non-metal plate 300 is the surface away from the object to be heated, the second non-metal plate 300 has a greater thickness than the first non-metal plate 100. Thus, it is possible to shorten the distance by which the heat is transferred to the first non-metal plate 100, which can improve the heat transfer rate and the heat utilization rate. In some embodiments, by adjusting the thickness of the first non-metal plate 100 and the second non-metal plate 300, or by, including but not limited, adjusting the materials of the first non-metal plate 100 and the second non-metal plate 300, by additionally providing a thermal insulation layer on one side away from the heating surface, or by other manners, a speed at which the heat generated by the heated the heating layer 200 is transferred to the first non-metal plate 100 is set greater than a speed at which the generated heat is transferred to the second non-metal plate 300.

According to some embodiments of the present disclosure, the materials of the first non-metal plate 100 and the second non-metal plate 300 are not particularly limited, and may be selected by those skilled in the art as desired. For example, the first non-metal plate 100 and the second non-metal plate 300 may each independently include one of ceramic, microcrystalline glass, and high borosilicate glass. For the microcrystalline glass, transparent microcrystalline glass, microcrystalline glass with an expansion coefficient of zero, surface-reinforced microcrystalline glass, different-color or machinable microcrystalline glass may be obtained by controlling a type, the number, a size and the like of crystallites. Thus, an appearance of the product can be improved to meet selection requirements of consumers with different preferences. In addition, the microcrystalline glass has dual characteristics of the glass and the ceramic. Like the ceramic, the microcrystalline glass consists of crystals. That is, atomic arrangement of the microcrystalline glass is regular. Therefore, the microcrystalline glass has a higher brightness than the ceramic, and a stronger toughness than the glass. Thus, it is possible to satisfy higher requirements of the consumer. In addition, the high borosilicate glass has low coefficient of thermal expansion, high physical strength, and stronger crash resistance. Thus, the service life of the heat-generating assembly can be prolonged.

For example, both the first non-metal plate 100 and the second non-metal plate 300 may be made of the ceramic. The ceramic has an appearance effect such as jade, and superior heat dissipation effect in the inorganic material. Therefore, on the one hand, when applied to a health-preserving kettle, the first non-metal plate 100 and the second non-metal plate 300 made of the ceramic can form a consistent visual effect with side walls of the ceramic appearance of the health-preserving kettle, which can improve user experience. On the other hand, heat dissipation is facilitated.

For example, both the first non-metal plate 100 and the second non-metal plate 300 may be made of glass. Therefore, a glass kettle in which a bottom and side walls thereof are integrated may be formed, and an inorganic layer on an inner side may be thinner, which can significantly reduce the overall thickness of the heat-generating assembly 1100. When both the first non-metal plate 100 and the second non-metal plate 300 are made of the glass, an inner glass may also be made of the microcrystalline glass or high borosilicate glass. In some embodiments, the glass of the first non-metal plate 100 and the second non-metal plate 300 close to water or food to be heated may be a glass material with higher thermal conductivity coefficient, and an outer side may be made of a material with lower thermal conductivity coefficient. Therefore, the heat of the heating layer 200 can be quickly and more preferably transferred to the water or food to be heated. On the one hand, the heating efficiency can be improved. On the other hand, overheating of the heat-generating assembly can be avoided. In addition, the bottom and the side walls are made of an integrated glass, and thus a process is relatively simple during the manufacturing of the product.

In some embodiments, one side of each of the first non-metal plate 100 and the second non-metal plate 300 is made of the glass, and the other side is made of the ceramic. In some embodiments, the non-metal plate located at the side of the heating surface of the heat-generating assembly 1100 is made of the ceramic, and the other non-metal plate is made of the glass. Since the ceramic has advantages such as high density, water-proof, and quick heat dissipation, when heating the heat-generating assembly 1100, the heat can be quickly transferred to the water or food to be heated via the ceramic material. Or, the non-metal plate located at the side of the heating surface of the heat-generating assembly 1100 is made of the glass, and the other non-metal plate is made of the ceramic. In this case, since a mechanical strength of the ceramic material is better than that of the glass material, an outer side of the heat-generating assembly 1100 can be protected to a certain extent.

In still yet another aspect of the present disclosure, a cooking device is provided. The cooking device 2000 includes a base 3000, and the cooking appliance 1000 as described above. Therefore, the cooking device 2000 has all the features and advantages of the cooking appliance 1000 as described above, and the description thereof in detail will be omitted herein. In general, the advantages such as fast heat transfer, uniform heat transfer, and long service life can be at least provided.

In the description of the present disclosure, it should be understood that, the orientation or position relationship indicated by the terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc., is based on the orientation or position relationship shown in the accompanying drawings, and is merely for the convenience of describing the present disclosure and simplifying the description, rather than indicating or implying that the associated device or element must have a specific orientation, or be constructed and operated in a specific orientation, and therefore cannot be understood as a limitation to the present disclosure.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present disclosure, "plurality" means at least two, such as two, three, etc., unless otherwise preferably defined.

In the present disclosure, unless expressly stipulated and defined otherwise, the first feature "on" or "under" the second feature may mean that the first feature is in direct contact with the second feature, or the first and second features are in indirect contact through an intermediate. Moreover, the first feature "above" the second feature may mean that the first feature is directly above or obliquely above the second feature, or simply mean that the level of the first feature is higher than that of the second feature. The first feature "below" the second feature may mean that the first feature is directly below or obliquely below the second feature, or simply mean that the level of the first feature is smaller than that of the second feature.

In the description of this specification, descriptions with reference to the terms "an embodiment", "some embodiments", "examples", "specific examples", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner. In addition, those skilled in the art can combine the different embodiments or examples and the features of the different embodiments or examples described in this specification without contradicting each other.

## Claims

1. A heat-generating assembly (1100), comprising:
two non-metal plates; and
a heating layer (200) located between the non-metal plates, **characterised in that**, the heating layer comprises:
an inorganic oxide matrix (220); and
metal powder particles distributed in the inorganic oxide matrix (220),
wherein in at least part of the heating layer (200), a plurality of particle aggregates (210) is formed by the metal powder particles and arranged in a thickness direction of the heating layer (200).

2. The heat-generating assembly (1100) according to claim 1, wherein in the at least part of the heating layer (200), the plurality of particle aggregates (210) is arranged at intervals and/or adjoined to each other in the thickness direction of the heating layer (200).

3. The heat-generating assembly (1100) according to claim 1, wherein in the at least part of the heating layer (200), the plurality of particle aggregates (210) is arranged at intervals in an extending direction of the non-metal plates.

4. The heat-generating assembly according to claim 1, wherein in the at least part of the heating layer (200), the plurality of particle aggregates (210) is staggered with each other in the thickness direction of the heating layer (200).

5. The heat-generating assembly (1100) according to any one of claims 1 to 4, wherein:
in the at least part of the heating layer (200), the particle aggregates (210) are connected to each other by the inorganic oxide matrix (220); and
the inorganic oxide matrix (220) has pores.

6. The heat-generating assembly according to claim 5, wherein:
a pore is formed at a connection between the particle aggregate (210) and the inorganic oxide matrix (220); and
the pores in the inorganic oxide matrix (220) have each a smaller size than the pore at the connection between the particle aggregate (210) and the inorganic oxide matrix (220).

7. The heat-generating assembly (1100) according to claim 3, wherein the plurality of particle aggregates (210) is arranged in a same direction along the extending direction of the non-metal plates.

8. The heat-generating assembly according to claim 7, wherein the plurality of particle aggregates (210) is arranged parallel to the non-metal plates.

9. The heat-generating assembly (1100) according to any one of claims 6 to 8, wherein:
the particle aggregate (210) is of an irregular shape; and
the particle aggregate (210) has a long axis extending in an extending direction of the non-metal plates, and a short axis extending in the thickness direction of the heating layer (200).

10. The heat-generating assembly (1100) according to claim 2, wherein:
in the at least part of the heating layer (200), the plurality of particle aggregates (210) is arranged in layers in the thickness direction of the heating layer (200); and
the particle aggregates (210) in each of the layers are arranged at intervals and/or adjoined to each other in an extending direction of the non-metal plates, optionally, wherein in the at least part of the heating layer (200), two adjacent layers of particle aggregates (210) are connected by the inorganic oxide matrix (220).

11. The heat-generating assembly (1100) according to claim 1, wherein in the at least part of the heating layer (200), the plurality of particle aggregates (210) is arranged away from the non-metal plates, and spaced apart from the non-metal plates by the inorganic oxide matrix (220).

12. The heat-generating assembly (1100) according to claim 1, wherein in the at least part of the heating layer (200), the plurality of particle aggregates (210) in the heating layer (200) is arranged away from a middle region of the heating layer (200).

13. The heat-generating assembly (1100) according to claim 1, wherein:
the heating layer (200) is embedded into the non-metal plate; and
a contact interface between the heating layer (200) and the non-metal plate is a concave-convex interface.

14. The heat-generating assembly (1100) according to claim 1, wherein:
the inorganic oxide matrix (220) is made of a material comprising at least one of SiO₂, Bi₂O₃, Al₂O₃, B₂O₃, ZnO, TiO₂ and Na₂O; and/or
the metal powder particle is any one of silver, copper, and aluminum; and/or
a content of the metal powder particles accounts for 60% to 90% of total mass of the heating layer (200).

15. A cooking appliance (1000), comprising:
a container body (1200); and
the heat-generating assembly (1100) according to any one of claims 1 to 14, the heat-generating assembly (1100) being disposed in the container body (1200), optionally, wherein a thickness of the non-metal plate close to an object to be heated is smaller than a thickness of the non-metal plate away from the object to be heated, optionally, comprising:
a base (3000).

## Patentansprüche

1. Wärmeerzeugende Baugruppe (1100), umfassend:
zwei nichtmetallische Platten; und
eine zwischen den nichtmetallischen Platten befindliche Heizschicht (200), **dadurch gekennzeichnet, dass** die Heizschicht Folgendes umfasst:
eine Matrix (220) aus anorganischem Oxid; und
in der Matrix (220) aus anorganischem Oxid verteilte Metallpulverteilchen, wobei in mindestens einem Teil der Heizschicht (200) von den Metallpulverteilchen eine Vielzahl von Teilchenaggregaten (210) gebildet und in einer Dickenrichtung der Heizschicht (200) angeordnet ist.

2. Wärmeerzeugende Baugruppe (1100) nach Anspruch 1, wobei in dem mindestens einen Teil der Heizschicht (200) die Vielzahl von Teilchenaggregaten (210) in der Dickenrichtung der Heizschicht (200) in Abständen und/oder aneinander angrenzend angeordnet ist.

3. Wärmeerzeugende Baugruppe (1100) nach Anspruch 1, wobei in dem mindestens einen Teil der Heizschicht (200) die Vielzahl von Teilchenaggregaten (210) in einer Erstreckungsrichtung der nichtmetallischen Platten in Abständen angeordnet ist.

4. Wärmeerzeugende Baugruppe nach Anspruch 1, wobei in dem mindestens einen Teil der Heizschicht (200) die Vielzahl von Teilchenaggregaten (210) in der Dickenrichtung der Heizschicht (200) versetzt angeordnet ist.

5. Wärmeerzeugende Baugruppe (1100) nach einem der Ansprüche 1 bis 4, wobei:
in dem mindestens einen Teil der Heizschicht (200) die Teilchenaggregate (210) durch die Matrix (220) aus anorganischem Oxid miteinander verbunden sind; und
die Matrix (220) aus anorganischem Oxid Poren aufweist.

6. Wärmeerzeugende Baugruppe nach Anspruch 5, wobei:
eine Pore an einer Verbindung zwischen dem Teilchenaggregat (210) und der Matrix (220) aus anorganischem Oxid gebildet wird; und
die Poren in der Matrix (220) aus anorganischem Oxid je eine kleinere Größe aufweisen als die Pore an der Verbindung zwischen dem Teilchenaggregat (210) und der Matrix (220) aus anorganischem Oxid.

7. Wärmeerzeugende Baugruppe (1100) nach Anspruch 3, wobei die Vielzahl von Teilchenaggregaten (210) in einer selben Richtung entlang der Erstreckungsrichtung der nichtmetallischen Platten angeordnet ist.

8. Wärmeerzeugende Baugruppe nach Anspruch 7, wobei die Vielzahl von Teilchenaggregaten (210) parallel zu den nichtmetallischen Platten angeordnet ist.

9. Wärmeerzeugende Baugruppe (1100) nach einem der Ansprüche 6 bis 8, wobei:
das Teilchenaggregat (210) eine ungleichmäßige Form hat; und
das Teilchenaggregat (210) eine sich in einer Erstreckungsrichtung der nichtmetallischen Platten erstreckende lange Achse und eine sich in der Dickenrichtung der Heizschicht (200) erstreckende kurze Achse aufweist.

10. Wärmeerzeugende Baugruppe (1100) nach Anspruch 2, wobei:
in dem mindestens einen Teil der Heizschicht (200) die Vielzahl von Teilchenaggregaten (210) in der Dickenrichtung der Heizschicht (200) in Schichten angeordnet ist; und
die Teilchenaggregate (210) in jeder der Schichten in einer Erstreckungsrichtung der nichtmetallischen Platten in Abständen und/oder aneinander angrenzend angeordnet sind, wobei optional in dem mindestens einen Teil der Heizschicht (200) zwei benachbarte Schichten von Teilchenaggregaten (210) durch die Matrix (220) aus anorganischem Oxid verbunden sind.

11. Wärmeerzeugende Baugruppe (1100) nach Anspruch 1, wobei in dem mindestens einen Teil der Heizschicht (200) die Vielzahl von Teilchenaggregaten (210) von den nichtmetallischen Platten entfernt angeordnet und von den nichtmetallischen Platten durch die Matrix (220) aus anorganischem Oxid beabstandet ist.

12. Wärmeerzeugende Baugruppe (1100) nach Anspruch 1, wobei in dem mindestens einen Teil der Heizschicht (200) die Vielzahl von Teilchenaggregaten (210) in der Heizschicht (200) von einem mittleren Bereich der Heizschicht (200) entfernt angeordnet ist.

13. Wärmeerzeugende Baugruppe (1100) nach Anspruch 1, wobei:
die Heizschicht (200) in die nichtmetallische Platte eingebettet ist; und
eine Kontaktgrenzfläche zwischen der Heizschicht (200) und der nichtmetallischen Platte eine konkav-konvexe Grenzfläche ist.

14. Wärmeerzeugende Baugruppe (1100) nach Anspruch 1, wobei:
die Matrix (220) aus anorganischem Oxid aus einem Material hergestellt ist, das mindestens eines von SiO₂, Bi₂O₃, Al₂O₃, B₂O₃, ZnO, TiO₂ und Na₂O umfasst; und/oder
das Metallpulverteilchen ein beliebiges von Silber, Kupfer und Aluminium ist;
und/oder
ein Gehalt der Metallpulverteilchen 60 % bis 90 % der Gesamtmasse der Heizschicht (200) ausmacht.

15. Kochgerät (1000), umfassend:
einen Behälterkörper (1200); und
die wärmeerzeugende Baugruppe (1100) nach einem der Ansprüche 1 bis 14, wobei die wärmeerzeugende Baugruppe (1100) in dem Behälterkörper (1200) untergebracht ist, wobei optional eine Dicke der nichtmetallischen Platte, die nahe bei einem zu erhitzenden Objekt ist, kleiner ist als eine Dicke der nichtmetallischen Platte, die von dem zu erhitzenden Objekt entfernt ist, optional umfassend:
eine Basis (3000).

## Revendications

1. Ensemble de génération de chaleur (1100), comprenant :
deux plaques non métalliques ; et
une couche de chauffage (200) située entre les plaques non métalliques, **caractérisé en ce que**, la couche de chauffage comprend :
une matrice d'oxyde inorganique (220) ; et
des particules de poudre métallique distribuées dans la matrice d'oxyde inorganique (220), dans lequel dans au moins une partie de la couche de chauffage (200), une pluralité d'agrégats de particules (210) sont formés par les particules de poudre métallique et agencés dans une direction d'épaisseur de la couche de chauffage (200).

2. Ensemble de génération de chaleur (1100) selon la revendication 1, dans lequel dans ladite au moins une partie de la couche de chauffage (200), la pluralité d'agrégats de particules (210) sont agencés à des intervalles et/ou sont contigus les uns aux autres dans la direction d'épaisseur de la couche de chauffage (200).

3. Ensemble de génération de chaleur (1100) selon la revendication 1, dans lequel dans ladite au moins une partie de la couche de chauffage (200), la pluralité d'agrégats de particules (210) sont agencés à des intervalles dans une direction d'extension des plaques non métalliques.

4. Ensemble de génération de chaleur selon la revendication 1, dans lequel dans ladite au moins une partie de la couche de chauffage (200), la pluralité d'agrégats de particules (210) sont décalés les uns par rapport aux autres dans la direction d'épaisseur de la couche de chauffage (200).

5. Ensemble de génération de chaleur (1100) selon l'une quelconque des revendications 1 à 4, dans lequel :
dans ladite au moins une partie de la couche de chauffage (200), les agrégats de particules (210) sont connectés les uns aux autres par la matrice d'oxyde inorganique (220) ; et
la matrice d'oxyde inorganique (220) comporte des pores.

6. Ensemble de génération de chaleur selon la revendication 5, dans lequel :
un pore est formé à une connexion entre l'agrégat de particules (210) et la matrice d'oxyde inorganique (220) ; et
les pores dans la matrice d'oxyde inorganique (220) ont chacun une taille inférieure à celle du pore à la connexion entre l'agrégat de particules (210) et la matrice d'oxyde inorganique (220).

7. Ensemble de génération de chaleur (1100) selon la revendication 3, dans lequel la pluralité d'agrégats de particules (210) sont agencés dans une même direction le long de la direction d'extension des plaques non métalliques.

8. Ensemble de génération de chaleur selon la revendication 7, dans lequel la pluralité d'agrégats de particules (210) sont agencés parallèles aux plaques non métalliques.

9. Ensemble de génération de chaleur (1100) selon l'une quelconque des revendications 6 à 8, dans lequel :
l'agrégat de particules (210) est d'une forme irrégulière ; et
l'agrégat de particules (210) a un axe long s'étendant dans une direction d'extension des plaques non métalliques, et un axe court s'étendant dans une direction d'épaisseur de la couche de chauffage (200).

10. Ensemble de génération de chaleur (1100) selon la revendication 2, dans lequel :
dans ladite au moins une partie de la couche de chauffage (200), la pluralité d'agrégats de particules (210) sont agencés en couches dans la direction d'épaisseur de la couche de chauffage (200) ; et
les agrégats de particules (210) dans chacune des couches sont agencés à des intervalles et/ou contigus les uns par rapport aux autres dans une direction d'extension des plaques non métalliques, de manière facultative, dans lequel dans ladite au moins une partie de la couche de chauffage (200), deux couches adjacentes d'agrégats de particules (210) sont connectées par la matrice d'oxyde inorganique (220).

11. Ensemble de génération de chaleur (1100) selon la revendication 1, dans lequel dans ladite au moins une partie de la couche de chauffage (200), la pluralité d'agrégats de particules (210) sont agencés à distance des plaques non métalliques, et espacés des plaques non métalliques par la matrice d'oxyde inorganique (220).

12. Ensemble de génération de chaleur (1100) selon la revendication 1, dans lequel dans ladite au moins une partie de la couche de chauffage (200), la pluralité d'agrégats de particules (210) dans la couche de chauffage (200) sont agencés à distance d'une région centrale de la couche de chauffage (200).

13. Ensemble de génération de chaleur (1100) selon la revendication 1, dans lequel :
la couche de chauffage (200) est noyée dans la plaque non métallique ; et
une interface de contact entre la couche de chauffage (200) et la plaque non métallique est une interface concave-convexe.

14. Ensemble de génération de chaleur (1100) selon la revendication 1, dans lequel :
la matrice d'oxyde inorganique (220) est constituée d'un matériau comprenant au moins l'un de SiO₂, Bi₂O₃, Al₂O₃, B₂O₃, ZnO, TiO₂ et Na₂O ; et/ou
la particule de poudre métallique est l'une quelconque de l'argent, du cuivre et de l'aluminium ; et/ou
une teneur des particules de poudre métallique représente 60 % à 90 % de la masse totale de la couche de chauffage (200).

15. Appareil de cuisson (1000) comprenant :
un corps de récipient (1200) ; et
l'ensemble de génération de chaleur (1100) selon l'une quelconque des revendications 1 à 14, l'ensemble de génération de chaleur (1100) étant disposé dans le corps de récipient (1200), de manière facultative, dans lequel une épaisseur de la plaque non métallique à proximité d'un objet à chauffer est plus petite qu'une épaisseur de la plaque non métallique à distance de l'objet à chauffer, de manière facultative, comprenant :
une base (3000).
